# EUROPEAN PATENT SPECIFICATION

(11) **EP 2 314 649 B1**
(45) Date of publication and mention of the grant of the patent: **07.10.2015**
(21) Application number: 09806743.2
(22) Date of filing: 12.08.2009
(51) Int. Cl.: C09D 201/00, C09D 7/12

(54) **COATING COMPOSITIONS AND ARTICLES WITH FORMED COATING FILMS**
BESCHICHTUNGSZUSAMMENSETZUNGEN UND ARTIKEL MIT DARAUF GEBILDETEN BESCHICHTUNGSFILMEN
COMPOSITIONS DE REVÊTEMENT ET ARTICLES LES COMPORTANT

(30) Priority: 13.08.2008 JP 2008208725
(43) Date of publication of application: 27.04.2011
(73) Proprietor: Asahi Glass Company, Limited, Chiyoda-ku Tokyo 100-8405 (JP)
(72) Inventor: OTANI, Yoshimi, Tokyo 100-8405 (JP); MOTOTANI, Satoshi, Tokyo 100-8405 (JP)
(74) Representative: Müller-Boré & Partner Patentanwälte PartG mbB
(86) International application number: PCT/JP2009/064274
(87) International publication number: WO 2010/018852

(56) References cited:
- WO-A1-2006/129408
- WO-A1-2008/014903
- WO-A2-2004/112482
- JP-A- 11 323 195
- JP-A- 2003 282 161

## Description

### TECHNICAL FIELD

The present invention relates to a coating composition to form a coating film having voids, and an article having a coating film with voids formed thereon.

### BACKGROUND ART

An article having an antireflection function has been practically used for the purpose of reducing outside light reflection or improving light transmittance. The following plural methods are available as methods to impart antireflection functions. That is, there is a method of forming an antireflection film on a substrate by a dry method (such as a vapor deposition method or a sputtering method). There is a method of forming an antireflection film on a substrate by a wet coating method (such as a spin coating method, a screen printing method, a dip coating method or a spray coating method). There is a method of forming fine irregularities on the surface of a glass substrate by an etching method. There is a method of forming fine holes on the surface of a glass substrate by a dealkalization method.

Among such methods, the wet coating method has the following merits.
(i) The coating installation is relatively simple and inexpensive.
(ii) By changing the coating composition, it is possible to change the properties of the antireflection film, the adhesion to the substrate, the hardness of the antireflection film, etc.
(iii) By changing the coating composition, it is possible to impart various additional functions other than the antireflection function.

The following ones have been proposed as articles having antireflection films formed by wet coating methods.
(1) Patent Document 1 discloses a substrate with an antireflection coating film obtained by coating a substrate with a coating composition comprising a dispersion of hollow fine SiO₂ particles.
(2) Patent Document 2 discloses a low reflection glass article having formed on a glass substrate a low reflection film made of fine SiO₂ particles and a binder.
(3) Patent Document 3 discloses a structure having formed on the surface of a substrate a porous thin SiO₂ film formed by heat-treating a thin film made of a coating liquid containing an alkoxysilane and/or an alkyl alkoxysilane and an organic substance under such a condition that the organic substance will be evaporated or decomposed.

### PRIOR ART DOCUMENTS

Patent Document 1: WO2006/129408
Patent Document 2: JP-A-2001-278637
Patent Document 3: JP-A-2006-036598

### DISCLOSURE OF THE INVENTION

### PROBLEMS TO BE SOLVED BY THE INVENTION

However, the antireflection coating film disclosed in Patent Document 1 has had a drawback that as the reflectance of the film becomes low, the abrasion resistance of the film or the adhesion to the substrate tends to deteriorate, and it is necessary to increase the amount of relatively expensive hollow fine SiO₂ particles. Whereas, the low reflection film disclosed in Patent Document 2 has a drawback that as the reflectance of the film becomes low, the abrasion resistance of the film or the adhesion to the glass substrate tends to deteriorate. Further, the antireflection effect is inferior as compared with the antireflection coating film disclosed in Patent Document 1. Whereas, the porous thin SiO₂ film disclosed in Patent Document 3 has a drawback that if the thin film made of the coating liquid is not heated to a high temperature, voids will not be formed, and the antireflection effects cannot be obtainable. Therefore, the substrate which can be used is limited to a substrate which is durable against a high temperature. Further, the films disclosed in Patent Documents 1 to 3 are single-layer coatings, and therefore, a material having a high refractive index (such as TiO₂) cannot be used as the material for the films.

WO 2008/014903 A1 describes a particle in the shape of an encapsulated droplet comprising a core material and a shell material surrounding the core material, the shell material containing maleimide groups, preferably a copolymer of maleimide groups. The shell material contains a copolymer of styrene and maleic anhydride derivatives, of which more than 75 mole%, preferably more than 90 mole% is maleimide, and the average particle size is smaller than 300 nm. The particles are obtained by a process comprising by heating an ammonium salt of a maleic anhydride containing polymer in the presence of the core material at a temperature between 80°C and 195°C. WO 2004/112482 A2 discloses coatings and paints comprising a biomolecule composition, wherein the biomolecule composition comprises a phosphoric triester hydrolase. Also disclosed therein are methods of detoxification of a surface contaminated with an organophosphorus compound by contacting the surface with such a coating or paint. Also disclosed therein are coating and paint components derived from microorganisms.

It is an object of the present invention to provide a coating composition which is capable of improving an antireflection effect of a coating film and capable of forming such a coating film at a low cost and even at a relatively low temperature, and an article which has a high antireflection effect and for which a substrate to be used is relatively unlimited and low in cost.

### MEANS TO SOLVE THE PROBLEMS

A coating composition (which may hereinafter be referred to also as a coating composition (I)) of the present invention comprises a dispersion medium (a), fine particles (b) dispersed in the dispersion medium (a), and a terpene derivative (c) dissolved or dispersed in the dispersion medium (a), wherein the fine particles (b) are at least one selected from the group consisting of metal oxide fine particles, metal fine particles, pigment fine particles and resin fine particles, and the fine particles (b) have an average agglomerated particle size of from 1 to 1,000 nm, and the terpene derivative (c) is a terpene derivative having a hydroxyl group and/or a carbonyl group in its molecule, and the amount of the terpene derivative (c) is from 0.1 to 20 parts by mass per 1 part by mass of the solid content of the coating composition,
wherein the coating composition further contains a binder (d),
wherein the mass ratio of the fine particles (b) to the binder (d) (fine particles/binder) is from 9/1 to 1/9.

The above terpene derivative (c) preferably has, in its molecule, at least one member selected from the group consisting of a hydroxyl group, an aldehyde group and a keto group.

The amount of the terpene derivative (c) is preferably from 0.1 to 20 parts by mass per 1 part by mass of the solid content of the coating composition (I).

The above fine particles (b) preferably have an average agglomerated particle size of from 3 to 500 nm.

Further, the maximum amount of the terpene derivative (c) in the coating composition is at most 70 wt%.

The article of the present invention is one which comprises a substrate and a coating film obtainable from the coating composition of the present invention, formed on the substrate.

The above substrate is preferably a figured glass.

### ADVANTAGEOUS EFFECTS OF THE INVENTION

By the coating composition of the present invention, it is possible to improve the antireflection effect of a coating film and to form such a coating film at a low cost and at a relatively low temperature.

The article of the present invention has a high antireflection effect, and the substrate to be used therefor is relatively unlimited and low in cost.

### BRIEF DESCRIPTION OF THE DRAWINGS

Fig. 1 is a scanning electron microscopical photograph of a cross section of the coating film in Example 6.
Fig. 2 is a scanning electron microscopical photograph of a cross section of the coating film in Example 22.

### BEST MODE FOR CARRYING OUT THE INVENTION

### <COATING COMPOSITION (I)>

The coating composition (I) comprises a dispersion medium (a), fine particles (b) and a terpene derivative (c) and, as the case requires, contains a binder (b) or other additives.

### (DISPERSION MEDIUM (a))

The dispersion medium (a) (excluding the after-mentioned terpene derivative (c)) may, for example, be water, an alcohol (such as methanol, ethanol, isopropanol, butanol or diacetone alcohol), a ketone (such as acetone, methyl ethyl ketone or methyl isobutyl ketone), an ether (such as tetrahydrofuran or 1,4-dioxane), a cellosolve (such as methyl cellosolve or ethyl cellosolve), an ester (such as methyl acetate or ethyl acetate), a glycol ether (such as ethylene glycol monoalkyl ether), a nitrogen-containing compound (such as N,N-dimethylacetamide, N,N-dimethylsulfoxide or N-methylpyrrolidone), or a sulfur-containing compound (such as dimethylsulfoxide).

The dispersion medium (a) in the case where the binder (d) is a hydrolysate of an alkoxysilane, is required to contain water, since water is required for the hydrolysis of the alkoxysilane.

The dispersion medium (a) is preferably suitably selected depending upon the substrate or the binder (d).

As the dispersion medium (a) in a case where the substrate is a polycarbonate, an alcohol type dispersion medium containing a solvent (such as a nitrogen-containing compound) capable of dissolving the polycarbonate, is preferred.

As the dispersion medium (a) in a case where the substrate is a polyethylene terephthalate, an alcohol type dispersion medium containing a solvent (such as dichloromethane) capable of dissolving the polyethylene terephthalate is preferred.

In a case where the substrate is triacetyl cellulose, as the binder (d), a polyester, an acrylic resin, a silicone resin or the like may be employed, and as a dispersion medium (a) in a case where the binder (d) is a polyester, ethyl acetate or the like is preferred.

### (FINE PARTICLES (b))

The fine particles (b) are selected from metal oxide fine particles, metal fine particles, pigment fine particles or resin fine particles.

The material for the metal oxide fine particles may, for example, be Al₂O₃, SiO₂, SnO₂, TiO₂ ZrO₂, ZnO, CeO₂ Sb-containing SnOx (ATO), Sn-containing In₂O₃ (ITO) or RuO₂.

The material for the metal fine particles may, for example, be a metal (such as Ag or Ru) or an alloy (such as AgPd or RuAu).

The pigment fine particles may, for example, be an inorganic pigement (such as titanium black or carbon black) or an organic pigment.

The material for the resin fine particles may, for example, be a polystyrene or a melanin resin.

The shape of the fine particles (b) may, for example, be spherical, oval, acicular, plate-form, rod-form, conical, cylindrical, cubic, rectangular, diamond-shaped, star-shaped or irregular shape. Further, the fine particles (b) may be hollow or porous. Further, the fine particles (b) may be present in a state where the respective particles are independent of one another, the respective particles may be linked in a chain-form, or the respective particles may be agglomerated.

On type of such fine particles (b) may be used alone, or two or more types of such fine particles may be used in combination.

The average agglomerated particle size of the fine particles (b) is from 1 to 1,000 nm, preferably from 3 to 500 nm, further preferably from 5 to 300 nm. When the average agglomerated particle size of the fine particles (b) is at least 1 nm, the antireflection effect can be made sufficiently high. When the average agglomerated particle size of the fine particles (b) is at most 1,000 nm, the haze of the coating film can be suppressed to be low.

The average agglomerated particle size of the fine particles (b) is an average agglomerated particle size of the fine particles (b) in the dispersion medium (a) and can be measured by a dynamic light scattering method. In the case of monodisperse fine particles (b) free from agglomeration, the average agglomerated particle size is equal to the average primary particle size.

### (TERPENE DERIVATIVE (c))

Terpene means a hydrocarbon having a composition of (C₅H₈)ₙ (wherein n is an integer of at least 1) having isoprene (C₅H₈) as a constituting unit. The terpene derivative means a terpene having a functional group derived from terpene. The terpene derivative (c) in the present invention includes ones different in the unsaturation degree.

From the viewpoint of the antireflection effect of the coating film, the terpene derivative (c) in the present invention is a terpene derivative having a hydroxyl group and/or a carbonyl group in its molecule, more preferably a terpene derivative having at least one member selected from the group consisting of a hydroxyl group, an aldehyde group (-CHO), a keto group (-C(=O)-), an ester bond (-C(=O)O-) and a carboxyl group (-COOH) in its molecule, further preferably a terpene derivative having at least one member selected from the group consisting of a hydroxyl group, an aldehyde group and a keto group in its molecule.

The terpene derivative (c) in the present invention may, for example, be a terpene alcohol (such as α-terpineol, terpinene-4-ol, L-menthol, (±)citronellol, myltenol, borneol, nerol, farnesol or phytol), a terpene aldehyde (such as citral, β-cyclocitral or perillaldehyde) a terpene ketone (such as (±)camphor or β-ionone), a terpene carboxylic acid (such as citronellic acid or abietic acid), or a terpene ester (such as terpinyl acetate or menthyl acetate).

With respect to the terpene derivative (c) in the present invention, one type may be used alone, or two or more types may be used in combination.

### (BINDER (d))

The binder (d) may, for example, be a hydrolysate of an alkoxysilane (sol-gel silica) or a resin (such as a thermoplastic resin, a thermosetting resin or a ultraviolet curable resin).

The binder (d) is preferably suitably selected depending upon the substrate.

As the binder (d) in a case where the substrate is glass, a hydrolysate of an alkoxysilane is preferred.

The alkoxysilane may, for example, be a tetraalkoxysilane (such as tetramethoxysilane, tetraethoxysilane, tetrapropoxysilane or tetrabutoxysilane), an alkoxysilane having a pefluoropolyether group (such as perfluoropolyether triethoxysilane), an alkoxysilane having a perfluoroalkyl group (such as perfluoroethyl triethoxysilane), an alkoxysilane having a vinyl group (such as vinyl trimethoxysilane or vinyl triethoxysilane), an alkoxysilane having an epoxy group (such as 2-(3,4-epoxycyclohexyl)ethyl trimethoxysilane, 3-glycidoxypropyl trimethoxysilane, 3-glycidoxypropylmethyl diethoxysilane or 3-glycidoxypropyl triethoxysilane), or an alkoxysilane having an acryloyloxy group (such as 3-acryloyloxypropyl trimethoxysilane).

In the case of a tetraalkoxysilane, the hydrolysis of the alkoxysilane is carried out by using water in an amount of at least 4 times by mol or the alkoxysilane and an acid or alkali as a catalyst. The acid may, for example, be an inorganic acid (such as HNO₃, H₂SO₄ or HCl) or an organic acid (such as formic acid, oxalic acid, monochloroacetic acid, dichloroacetic acid or trichloroacetic acid). The alkali may, for example, be ammonia, sodium hydroxide or potassium hydroxide. As the catalyst, an acid is preferred from the viewpoint of a storage stability for a long period of time. Further, as the catalyst, one which does not hinder dispersion of the fine particles (b), is preferred.

### (OTHER ADDITIVES)

Other additives may, for example, be a surface active agent to improve the levelling property, a metal compound to improve the durability of the coating film, etc.

The surface active agent may, for example, be a silicone oil type or acrylic type surface active agent.

The metal compound is preferably, for example, a zirconium chelate compound, a titanium chelate compound, or an aluminium chelate compound. The zirconium chelate compound may, for example, be zirconium tetraacetyl acetonate or zirconium tributoxy stearate.

### (PREPARATION OF COATING COMPOSITION (I))

The coating composition (I) may be prepared, for example, by mixing the dispersion medium (a), a dispersion of fine particles (b) and the terpene derivative (c), and a solution of the binder (d).

The solid content concentration of the coating composition (I) may suitably be determined depending upon the coating method. In the case of a spin coating method, the solid content concentration of the coating composition (I) is preferably from 0.1 to 10 mass%, more preferably from 0.3 to 5 mass%. When the solid content concentration is at least 0.1 mass%, the coating efficiency will be good. When the solid content concentration is at most 10 mass%, a waste of the coating composition (I) can be suppressed.

In the case of a spray coating method, the solid content concentration of the coating composition (I) is preferably from 0.1 to 10 mass%, more preferably from 0.1 to 5 mass%. When the solid content concentration is at least 0.1 mass%, the coating efficiency will be good. When the solid content concentration is at most 10 mass%, a waste of the coating composition (I) can be suppressed.

The solid content of the coating composition (I) means the sum of the fine particles (b) and the binder (d) (provided that in the case of an alkoxysilane, a solid content concentration calculated as SiO₂).

The amount of the terpene derivative (c) is from 0.1 to 20 parts by mass, preferably from 0.7 to 20 parts by mass, per 1 part by mass of the solid content of the coating composition (I). When the terpene derivative (c) is at least 0.1 part by mass, the antireflection effect becomes sufficiently high as compared with a case where no terpene derivative (c) is added. When the terpene derivative (c) is at most 20 parts by mass, the appearance of the coating film will be good.

Further, the maximum amount of the terpene derivative (c) in the coating composition, is 70 wt%.

The mass ratio of the fine particles (b) to the binder (d) (fine particles/binder) is from 9/1 to 1/9, preferably from 7/3 to 3/7. When the fine particles/binder is at most 9/1, the adhesion between the coating film and the substrate will be sufficiently high. When the fine particles/binder is at least 1/9, the antireflection effect will be sufficiently high.

### <ARTICLE>

The article of the present invention is one wherein a coating film (hereinafter sometimes referred to as an antireflection film) obtainable from the coating composition of the present invention (the above-described (I)) is formed on a substrate.

The material for the substrate may, for example, be glass, a metal, a resin, silicon, wood, or paper. The glass may, for example, be one having a composition of e.g. soda lime glass, borosilicate glass, aluminosilicate glass or alkali-free glass. Further, in addition to a smooth glass formed by e.g. a float process, various glasses may be used, such as a figured glass obtainable by supplying molten glass between a roll member having irregularities impressed on its surface and another roll member for roll out forming. The resin may, for example, be polyethylene terephthalate, polycarbonate, triacetyl cellulose or methyl polymethacrylate.

The shape of the substrate is not particularly limited, but it may usually be a plate or film.

In the case of soda lime glass to be used for plate glass for building or vehicles, it preferably has a composition comprising, as represented by mass percentage based on oxides, from 65 to 75% of SiO₂, from 0 to 10% of Al₂O₃, from 5 to 15% of CaO, from 0 to 15% of MgO, from 10 to 20% of Na₂O from 0 to 3% of K₂O from 0 to 5% of Li₂O, from 0 to 3% of Fe₂O₃, from 0 to 5% of TiO₂, from 0 to 3% of CeO₂, from 0 to 5% of BaO, from 0 to 5% of SrO, from 0 to 15% of B₂O₃, from 0 to 5% of ZnO, from 0 to 5% of ZrO₂, from 0 to 3% of SnO₂ and from 0 to 0.5% of SO₃. Further, in the case of alkali-free glass, it preferably has a composition comprising, as represented by mass percentage based on oxides, from 39 to 70% of SiO₂, from 3 to 25% of Al₂O₃, from 1 to 30% of B₂O₃, from 0 to 10% of MgO, from 0 to 17% of CaO, from 0 to 20% of SrO, and from 0 to 30% of BaO. Further, in the case of mixed alkali glass, it preferably has a composition comprising, as represented by mass percentage based on oxides, from 50 to 75% of SiO₂, from 0 to 15% of Al₂O₃, from 6 to 24% of MgO+CaO+SrO+BaO+ZnO, and from 6 to 24% of Na₂O+K₂O.

As a substrate for cover glass for a solar cell, figured glass having a textured pattern on its surface is preferred. As a material for such figured glass, soda lime glass (white plate glass) having a smaller iron component ratio (higher transparency) than soda lime glass (blue plate glass) to be used for usual window glass, is preferred.

The antireflection film is formed by coating the surface of a substrate with the coating composition of the present invention, followed by firing.

The coating method may, for example, be a known wet coating method (such as a spin coating method, a spray coating method, a dip coating method, a die coating method, a roll coating method, a flexocoating method, a gravure coating method, a bar coating method, a curtain coating method, a screen coating method, an ink jet method or a flow coating method).

The coating temperature is preferably from room temperature to 80°C, more preferably from room temperature to 60°C.

The firing temperature is preferably at least 30°C and may suitably be determined depending upon the material for the substrate, the fine particles (b) or the binder (d). For example, in a case where the material for the substrate, the fine particles (b) or the binder (d) is a resin, the firing temperature is at most the heat resistant temperature of the resin, and an adequate antireflection effect can be obtained even at such a temperature. In a case where the substrate is glass, the firing step for an antireflection film may serve also as a step for physically reinforcing the glass. In such a physical reinforcing step, the glass is heated to a temperature close to the softening temperature. In such a case, the firing temperature is set at a level of from about 600 to 700°C. Usually, the firing temperature is preferably set to be at most the heat deformation temperature of the substrate. The lower limit value for the firing temperature is determined depending upon the blend composition of the coating composition. Even by natural drying, polymerization proceeds to some extent, and if there is no restriction in time, it is theoretically possible to set the firing temperature to be a temperature in the vicinity of room temperature.

The thickness of the antireflection film is preferably from 50 to 300 nm, more preferably from 80 to 200 nm. When the thickness of the antireflection film is at least 50 nm, interference of light takes place to exhibit an antireflection performance. When the thickness of the antireflection film is at most 300 nm, the film can be formed without forming cracks.

The thickness of the antireflection film can be obtained by measuring the coated and non-coated interface by a profilometer.

The reflectance of the antireflection film is preferably at most 2.6%, more preferably at most 1.5%, as the lowest value (so-called bottom reflectance) within a wavelength range of from 300 to 1,200 nm.

Within a range not to impair the effects of the present invention, functional layers (such as an adhesion-improving layer, a protective layer, etc.) other than the antireflection film obtained from the coating composition of the present invention may be formed. For example, on the surface of the substrate, an alkali barrier layer or an undercoat layer having a function as a layer (a low refractive index layer) for a wide band having a low refractive index in a wide wavelength range, may preliminarily be formed.

As such an undercoat layer, a layer is preferred which is formed by coating a substrate with a coating composition for undercoating containing a hydrolysate of an alkoxysilane (sol-gel silica).

In a case where the coating composition of the present invention is applied on the undercoat layer, the undercoat layer may preliminarily be fired or may be in a wet state. In a case where the coating composition of the present invention is applied on the undercoat layer, the coating temperature is preferably from 30 to 90°C, and the firing temperature is preferably from 30 to 700°C.

The thickness of the undercoat layer is preferably from 10 to 500 nm.

The above-described coating composition (I) comprises the dispersion medium (a), the fine particles (b) and the terpene derivative (c), whereby it is possible to improve the antireflection effect of the coating film, and it is possible to form such a coating film at a low cost and even at a relatively low temperature.

That is, when a coating film is formed by using the coating composition of the present invention, voids are selectively formed around fine particles (b) in the coating film, whereby the antireflection effect will be improved by such voids. The reason as to why such voids are selectively formed around the fine particles (b) is not clearly understood, but with a coating composition comprising the dispersion medium (a), the terpene derivative (c) and the binder (d) and containing no fine particles (b), no voids will be formed, and it is not possible to form a coating film having an antireflection effect.

Further, with the coating composition of the present invention, the volume of the void portions increases over the coating composition the dispersion medium (a), the fine particles (b) and the binder (d), whereby the antireflection effect becomes higher.

The coating film obtained from the coating composition of the present invention exhibits the antireflection effect by voids selectively formed around the fine particles (b), whereby it is not necessarily required to employ one having a low refractive index (such as SiO₂) as the material for the fine particles (b). Therefore, by the coating composition of the present invention, it is possible to form a coating film which has both the antireflection effect and various properties of the fine particles (b). For example, in a case where the material for the fine particles (b) is SiO₂, the refractive index of the coating film can be made lower, whereby a coating film having a lower reflection can be formed. Further, in a case where the material for the fine particles (b) is ATO, it is possible to form a coating film which has both the antireflection effect and the electrical conductivity and/or infrared-shielding property. Further, in a case where the material for the fine particles (b) is CeO₂ or ZnO, it is possible to form a coating film which has both the antireflection effect and an ultraviolet absorbing property. Further, even in a case where the material for the fine particles (b) is TiO₂ having a high refractive index, it is possible to form an antireflection film by a single layer coating which has been heretofore unexpected, and it is thereby possible to form a coating film which has both the antireflection effect and the hydrophilicity, antibacterial effect, etc. of TiO₂. Further, in a case where the material for the fine particles (b) is an organic pigment or an inorganic pigment, it is possible to form a colored antireflection coating film, or it is possible to produce a colored filter or the like having an antireflection function.

Further, the coating film obtainable from the coating composition of the present invention has an effect to reduce the mass or to lower the thermal conductivity by reducing the film density in a case where it is formed with a thickness of at least the optical thickness.

Further, the article of the present invention as described above has a coating film which has a high antireflection effect and can be formed at a low cost and even at a relatively low temperature, whereby it has a high antireflection effect, and the substrate to be used is not so limited and is relatively low in cost.

### EXAMPLES

Now, the present invention will be described in further detail with reference to Examples. However, it should be understood that the present invention is by no means restricted by the following description. Examples 17 to 47 are Working Examples of the present invention, and Examples 1 to 16 are Comparative Examples.

### (SHELL THICKNESS AND PORE SIZE OF HOLLOW FINE PARTICLES)

For the shell thickness and the pore size of hollow fine particles, a dispersion of hollow fine particles was diluted with ethanol to a concentration of 0.1 mass%, then sampled on a collodion film and observed by a transmission electron microscope (H-9000, manufactured by Hitachi, Ltd.), whereby 100 hollow fine particles were randomly selected, and the cell thicknesses and the pore diameters of the respective hollow fine particles were measured, and the shell thicknesses and the pore diameters of the 100 hollow fine particles were respectively averaged to obtain the shell thickness and the pore diameter of the hollow fine particles.

### (AVERAGE PRIMARY PARTICLE SIZE OF FINE PARTICLES)

For the average primary particle size of hollow fine particles, a dispersion of fine particles was diluted with ethanol to a concentration of 0.1 mass%, then sampled on a collodion film and observed by a transmission electron microscope (H-9000, manufactured by Hitachi, Ltd.), whereby 100 fine particles were randomly selected, and the particle sizes of the respective fine particles were measured, and the particle sizes of the 100 fine particles were averaged to obtain the average primary particle size of the fine particles. The average primary particle size of fine particles other than the hollow fine particles was calculated from the specific surface area measured by a BET method and the volume of spherical particles on the assumption that the spherical particles were uniformly dispersed in the carrier.

### (AVERAGE AGGLOMERATED PARTICLE SIZE OF FINE PARTICLES)

The average agglomerated particle size of fine particles was measured by using a dynamic light scattering particle size analyzer (MICROTRAC UPA manufactured by NIKKISO CO., LTD).

### (REFLECTANCE)

On the surface of a substrate on the side opposite to a coating film, a black vinyl tape was bonded not to include air bubbles, and the reflectance of the coating film of 100 mm x 100 mm at the center portion of the substrate was measured. Here, the reflectance is the bottom reflectance with a wavelength of from 300 m to 1,200 nm. In a case where the bottom reflectance was at most 380 nm or at least 780 nm, a spectrophotometer (V670 manufactured by JASCO Corporation) was used. Further, in a case where the bottom reflectance was in between 380 and 780 nm, a spectrophotometer (Multi Channel Photo Detector MCPD-3000, manufactured by Otsuka Electronics Co., Ltd.) was used.

### (ABRASION RESISTANCE)

A rubber eraser (GAZA1 K manufactured by LION K.K, 18 mm in length × 11 mm in width) was attached to a rubbing tester (manufactured by Taiheirika Kogyo K.K.), and the rubber eraser was horizontally reciprocated on the surface of a coating film with a load of 0.5 kg/cm², whereby the change in the appearance of the coating film as between before and after the five reciprocations of the rubber eraser was evaluated. For the change in appearance, the article having the coating film formed was placed on a fluorescent plate, and the surface of the coating film was visually observed from a position at 20 cm from the fluorescent plate, whereby the change in appearance was evaluated by the following standards.
⊚ : No flaw is observed on the coating film.
○: Flaws are slightly observed on the coating film.
Δ: Many flaws are observed on the coating film.
× : The coating film is completely removed.

### (MATERIAL COST)

The material cost of a coating composition in each Example was obtained, when the material cost (by estimate) of the coating composition in Example 1 was regarded as 1, and evaluated by the following standards.
○: The material cost of the coating composition is less than 0.4.
Δ: The material cost of the coating composition is at least 0.4 and less than 0.8.
×: The material cost of the coating composition is at least 0.8.

### PREPARATION OF BINDER SOLUTION (i):

While stirring 85.7 g of modified ethanol (SOLMIX AP-11, manufactured by Japan Alcohol Trading CO., LTD., mixed solvent containing ethanol as the main agent, the same applies hereinafter), a mixed liquid of 6.6 g of deionized water and 0.1 g of 61 mass% nitric acid was added thereto, followed by stirring for 5 minutes. Then, 7.6 g of tetraethoxysilane (solid content concentration calculated as SiO₂: 29 mass%) was added thereto, followed by stirring at room temperature for 30 minutes, to obtain a binder solution (i) having a solid content concentration calculated as SiO₂ of 2.2 mass%. Here, the solid content concentration calculated as SiO₂ is the solid content concentration when all Si of tetraethoxysilane was converted to SiO₂.

### PREPARATION OF DISPERSION (ii) OF HOLLOW FINE SiO₂ PARTICLES:

While stirring 29.07 g of modified ethanol, 39 g of water, 21 g of an aqueous dispersion of fine ZnO particles (FZO-50 manufactured by Ishihara Sangyo Kaisha, Ltd., solid content concentration: 20 mass%, average primary particle size: 21 nm, average agglomerated particle size: 40 nm) and 10 g of tetraethoxysilane (solid content concentration calculated as SiO₂: 29 mass%) were added thereto, then 0.75 g of 28 mass% aqueous ammonia was added to adjust the pH of the dispersion to 10, followed by stirring at 20°C for 4.5 hours. Then, 0.18 g of zirconium tetraacetyl acetonate (manufactured by KANTO CHEMICAL CO., INC.) was added thereto, followed by stirring for 1.5 hours to obtain 100 g of a dispersion of core-shell fine particles (solid content concentration: 7.2 mass%).

To the obtained dispersion of core-shell fine particles, 100 g of a strongly acidic cation exchange resin (DIAION manufactured by Mitsubishi Chemical Corporation, total exchange capacity: at least 2.0 mseq/mL) was added, followed by stirring for one hour to bring the pH to be 4, and then the strongly acidic cation resin was removed by filtration to obtain a dispersion of hollow fine SiO₂ particles having a solid content concentration calculated as SiO₂ of 3 mass%. The shell thickness of the hollow fine SiO₂ particles was 6 nm, the pore size was 30 nm, and the average agglomerated particle size was 50 nm. The dispersion of hollow fine SiO₂ particles was concentrated by an ultrafiltration membrane to obtain a dispersion (ii) of hollow fine SiO₂ particles having a solid content concentration calculated as SiO₂ of 12 mass%.
DISPERSION (iii) OF FINE CHAIN SiO₂ PARTICLES:
SNOWTEX OUP manufactured by Nissan Chemical Industries, Ltd., solid content concentration calculated as SiO₂: 15.5 mass%, average agglomerated particle size: from 40 to 100 nm
DISPERSION (iv) OF FINE PLATE-FORM Al₂O₃ PARTICLES:
ALUMINASOL 520 manufactured by Nissan Chemical Industries, Ltd., solid content concentration: 20.4 mass%, average primary particle size: from 10 to 20 nm
DISPERSION (v) OF FINE SPHERICAL TiO₂ PARTICLES:
STS-01 manufactured by Ishihara Sangyo Kaisha, Ltd., solid content concentration: 29.7 mass%, average agglomerated particle size: 7 nm

### EXAMPLE 1

### PREPARATION OF COATING COMPOSITION (A):

While stirring 50.8 g of modified ethanol, 20.5 g of the binder solution (i) and 8.8 g of the dispersion (ii) of hollow fine SiO₂ particles were added thereto, and then, 15 g of ethylene glycol monoisopropyl ether and 5 g of diacetone alcohol were added to prepare a coating composition (A) having a solid content concentration of 1.5 mass%. The compositional components are shown in Table 1.

### FORMATION OF COATING FILM:

As a substrate, a glass plate (FL3.5 manufactured by Asahi Glass Company, Limited, soda lime glass, size: 100 mm × 100 mm, thickness: 3.5 mm) was prepared, and the surface of the glass plate was polished with an aqueous dispersion of cerium oxide, and after washing the cerium oxide off with water, rinsed with deionized water and dried.

Then, the glass plate maintained at room temperature was set on a spin coater (1H-360S manufactured by MIKASA CO., LTD.), and 2 cc of the coating composition (A) was sampled by a dropper, then dropped and spin-coated on the surface of the glass plate and then fired in the atmosphere at 500°C for 30 minutes to obtain an article having a coating film formed thereon. The coating film of the article was evaluated. The results are shown in Table 4.

### EXAMPLE 2

### PREPARATION OF COATING COMPOSITION (B):

While stirring 70.3 g of modified ethanol, 9.7 g of the dispersion (iii) of fine chain SiO₂ particles was added, and then 15.0 g of ethylene glycol monoisopropyl ether and 5.0 g of diacetone alcohol were added to prepare a coating composition (B) having a solid content concentration of 1.5 mass%. The compositional components are shown in Table 1.

### FORMATION OF COATING FILM:

On the glass plate prepared in the same manner as in Example 1, the coating composition (B) was applied and fired in the same manner as in Example 1 to obtain an article having a coating film formed thereon. The coating film of the article was evaluated. The results are shown in Table 5.

### EXAMPLE 3

### PREPARATION OF COATING COMPOSITION (C):

While stirring 64.5 g of modified ethanol, 6.8 g of the binder solution (i) and 8.7 g of the dispersion (iii) of fine chain SiO₂ particles were added thereto, and then 15.0 g of ethylene glycol monoisopropyl ether and 5.0 g of diacetone alcohol were added to prepare a coating composition (C) having a solid content concentration of 1.5 mass%. The compositional components are shown in Table 1.

### FORMATION OF COATING FILM:

On the glass plate prepared in the same manner as in Example 1, the coating composition (C) was applied and fired in the same manner as in Example 1 to obtain an article having a coating film formed thereon. The coating film of the article was evaluated. The results are shown in Table 5.

### EXAMPLE 4

### PREPARATION OF COATING COMPOSITION (D):

With respect to the compositional components shown in Table 1, a coating composition (D) having a solid content concentration of 1.5 mass% was prepared in the same manner as in Example 3.

### FORMATION OF COATING FILM:

On the glass plate prepared in the same manner as in Example 1, the coating composition (D) was applied and fired in the same manner as in Example 1 to obtain an article having a coating film formed thereon. The coating film of the article was evaluated. The results are shown in Table 5.

### EXAMPLE 5

### PREPARATION OF COATING COMPOSITION (E):

With respect to the compositional components shown in Table 1, a coating composition (E) having a solid content concentration of 1.5 mass% was prepared in the same manner as in Example 3.

### FORMATION OF COATING FILM:

On the glass plate prepared in the same manner as in Example 1, the coating composition (E) was applied and fired in the same manner as in Example 1 to obtain an article having a coating film formed thereon. The coating film of the article was evaluated. The results are shown in Table 5.

### EXAMPLE 6

### PREPARATION OF COATING COMPOSITION (F):

With respect to the compositional components shown in Table 1, a coating composition (F) having a solid content concentration of 1.5 mass% was prepared in the same manner as in Example 3.

### FORMATION OF COATING FILM:

On the glass plate prepared in the same manner as in Example 1, the coating composition (F) was applied and fired in the same manner as in Example 1 to obtain an article having a coating film formed thereon. The coating film of the article was evaluated. The results are shown in Tables 5 and 9.

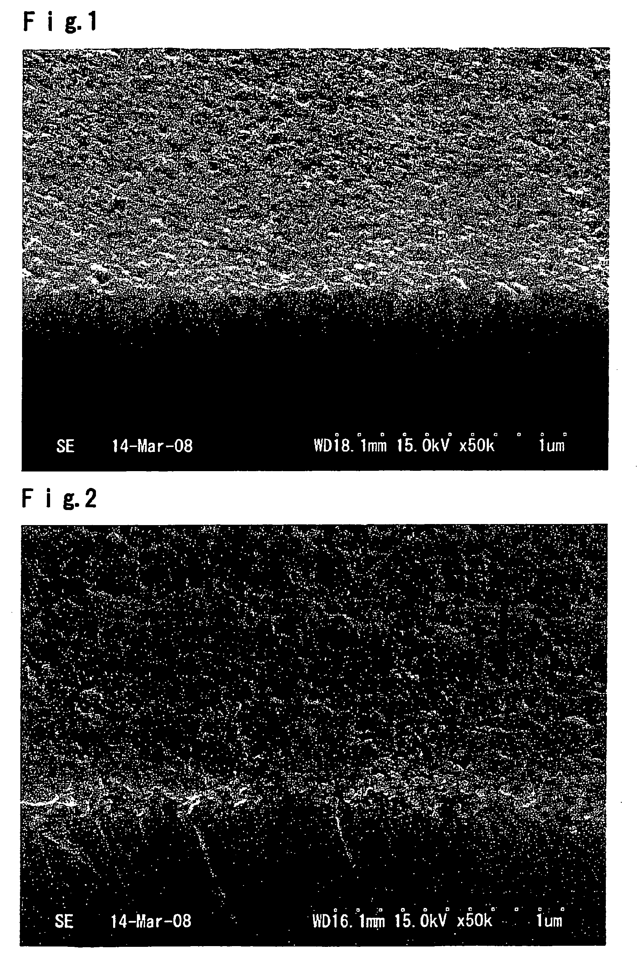

Further, a scanning electron microscopic photograph of a cross section of the coating film is shown in Fig. 1.

### EXAMPLE 7

### PREPARATION OF COATING COMPOSITION (G):

With respect to the compositional components shown in Table 1, a coating composition (G) having a solid content concentration of 1.5 mass% was prepared in the same manner as in Example 3.

### FORMATION OF COATING FILM:

On the glass plate prepared in the same manner as in Example 1, the coating composition (G) was applied and fired in the same manner as in Example 1 to obtain an article having a coating film formed thereon. The coating film of the article was evaluated. The results are shown in Table 5.

### EXAMPLE 8

### PREPARATION OF COATING COMPOSITION (H):

With respect to the compositional components shown in Table 1, a coating composition (H) having a solid content concentration of 1.5 mass% was prepared in the same manner as in Example 3.

### FORMATION OF COATING FILM:

On the glass plate prepared in the same manner as in Example 1, the coating composition (H) was applied and fired in the same manner as in Example 1 to obtain an article having a coating film formed thereon. The coating film of the article was evaluated. The results are shown in Table 5.

### EXAMPLE 9

### PREPARATION OF COATING COMPOSITION (I):

With respect to the compositional components shown in Table 1, a coating composition (I) having a solid content concentration of 1.5 mass% was prepared in the same manner as in Example 3.

### FORMATION OF COATING FILM:

On the glass plate prepared in the same manner as in Example 1, the coating composition (I) was applied and fired in the same manner as in Example 1 to obtain an article having a coating film formed thereon. The coating film of the article was evaluated. The results are shown in Table 5.

### EXAMPLE 10

### PREPARATION OF COATING COMPOSITION (J):

With respect to the compositional components shown in Table 1, a coating composition (J) having a solid content concentration of 1.5 mass% was prepared in the same manner as in Example 3.

### FORMATION OF COATING FILM:

On the glass plate prepared in the same manner as in Example 1, the coating composition (J) was applied and fired in the same manner as in Example 1 to obtain an article having a coating film formed thereon. The coating film of the article was evaluated. The results are shown in Table 5.

### EXAMPLE 11

### PREPARATION OF COATING COMPOSITION (K)

While stirring 10.3 g of modified ethanol, 68.2 g of the binder solution (i), 1.5 g of polypropylene glycol (manufactured by Wako Pure Chemical Industries, Ltd., molecular weight: 4,000), 15.0 g of ethylene glycol monoisopropyl ether and 5.0 g of diacetone alcohol were added thereto to prepare a coating composition (K) having a solid content concentration of 1.5 mass%. The compositional components are shown in Table 1.

### FORMATION OF COATING FILM:

On the glass plate prepared in the same manner as in Example 1, the coating composition (K) was applied and fired in the same manner as in Example 1 to obtain an article having a coating film formed thereon. The coating film of the article was evaluated. The results are shown in Table 8.

### EXAMPLE 12

### FORMATION OF COATING FILM:

An article having a coating film formed thereon was obtained in the same manner as in Example 11 except that the firing temperature was changed to 100°C. The coating film of the article was evaluated. The results are shown in Table 8.

### EXAMPLE 13

### PREPARATION OF COATING COMPOSITION (L):

While stirring 42.2 g of modified ethanol, 34.1 g of the binder solution (i), 3.7 g of the dispersion (iv) of fine plate-form Al₂O₃ particles were added, and 15.0 g of ethylene glycol monoisopropyl ether and 5.0 g of diacetone alcohol were added to prepare a coating composition (L) having a solid content concentration of 1.5 mass%. The compositional components are shown in Table 1.

### FORMATION OF COATING FILM:

On the glass plate prepared in the same manner as in Example 1, the coating composition (L) was applied and fired in the same manner as in Example 1 to obtain an article having a coating film formed thereon. The coating film of the article was evaluated. The results are shown in Table 10.

### EXAMPLE 14

### PREPARATION OF COATING COMPOSITION (M):

While stirring 11.65 g of modified ethanol, 68.2 g of the binder solution (i), 15.0 g of ethylene glycol monoisopropyl ether, 5.0 g of diacetone alcohol and 0.15 g of α-terpineol were added to prepare a coating composition (M) having a solid content concentration of 1.5 mass%. The compositional components are shown in Table 1.

### FORMATION OF COATING FILM:

On the glass plate prepared in the same manner as in Example 1, the coating composition (M) was applied and fired in the same manner as in Example 1 to obtain an article having a coating film formed thereon. The coating film of the article was evaluated. The results are shown in Table 5.

### EXAMPLE 15

### PREPARATION OF COATING COMPOSITION (N):

With respect to the compositional components shown in Table 1, a coating composition (N) having a solid content concentration of 1.5 mass% was prepared in the same manner as in Example 14.

### FORMATION OF COATING FILM:

On the glass plate prepared in the same manner as in Example 1, the coating composition (N) was applied and fired in the same manner as in Example 1 to obtain an article having a coating film formed thereon. The coating film of the article was evaluated. The results are shown in Table 5.

### EXAMPLE 16

### PREPARATION OF COATING COMPOSITION (O):

With respect to the compositional components shown in Table 1, a coating composition (O) having a solid content concentration of 1.5 mass% was prepared in the same manner as in Example 14.

### FORMATION OF COATING FILM:

On the glass plate prepared in the same manner as in Example 1, the coating composition (O) was applied and fired in the same manner as in Example 1 to obtain an article having a coating film formed thereon. The coating film of the article was evaluated. The results are shown in Table 5.

### EXAMPLE 17

### PREPARATION OF COATING COMPOSITION (P):

While stirring 37.6 g of modified ethanol, 34.1 g of the binder solution (i), and 6.3 g of the dispersion (ii) of hollow fine SiO₂ particles were added thereto, and 15.0 g of ethylene glycol monoisopropyl ether, 5.0 g of diacetone alcohol and 2 g of α-terpineol were added to prepare a coating composition (P) having a solid content concentration of 1.5 mass%. The compositional components are shown in Table 2.

### FORMATION OF COATING FILM:

On the glass plate prepared in the same manner as in Example 1, the coating composition (P) was applied and fired in the same manner as in Example 1 to obtain an article having a coating film formed thereon. The coating film of the article was evaluated. The results are shown in Table 4.

### EXAMPLE 18

### PREPARATION OF COATING COMPOSITION (Q):

With respect to the compositional components shown in Table 2, a coating composition (Q) having a solid content concentration of 1.5 mass% was prepared in the same manner as in Example 17.

### FORMATION OF COATING FILM:

On the glass plate prepared in the same manner as in Example 1, the coating composition (Q) was applied and fired in the same manner as in Example 1 to obtain an article having a coating film formed thereon. The coating film of the article was evaluated. The results are shown in Table 4.

### EXAMPLE 19

### PREPARATION OF COATING COMPOSITION (R):

A coating composition (R) having a solid content concentration of 1.5 mass% was prepared in the same manner as in Example 2 except that the modified ethanol was changed to 70.15 g, and 0.15 g of α-terpineol was added. The compositional components are shown in Table 2.

### FORMATION OF COATING FILM:

On the glass plate prepared in the same manner as in Example 1, the coating composition (R) was applied and fired in the same manner as in Example 1 to obtain an article having a coating film formed thereon. The coating film of the article was evaluated. The results are shown in Tables 5 and 6.

### EXAMPLE 20

### PREPARATION OF COATING COMPOSITION (S):

A coating composition (S) having a solid content concentration of 1.5 mass% was prepared in the same manner as in Example 6 except that the modified ethanol was changed to 46.75 g, and 0.15 g of α-terpineol was added. The compositional components are shown in Table 2.

### FORMATION OF COATING FILM:

On the glass plate prepared in the same manner as in Example 1, the coating composition (S) was applied and fired in the same manner as in Example 1 to obtain an article having a coating film formed thereon. The coating film of the article was evaluated. The results are shown in Table 5.

### EXAMPLE 21

### PREPARATION OF COATING COMPOSITION (T):

A coating composition (T) having a solid content concentration of 1.5 mass% was prepared in the same manner as in Example 10 except that the modified ethanol was changed to 17.45 g, and 0.15 g of α-terpineol was added. The compositional components are shown in Table 2.

### FORMATION OF COATING FILM:

On the glass plate prepared in the same manner as in Example 1, the coating composition (T) was applied and fired in the same manner as in Example 1 to obtain an article having a coating film formed thereon. The coating film of the article was evaluated. The results are shown in Tables 5 and 6.

### EXAMPLE 22

### PREPARATION OF COATING COMPOSITION (U):

A coating composition (U) having a solid content concentration of 1.5 mass% was prepared in the same manner as in Example 6 except that the modified ethanol was changed to 45.4 g, and 1.5 g of α-terpineol was added. The compositional components are shown in Table 2.

### FORMATION OF COATING FILM:

On the glass plate prepared in the same manner as in Example 1, the coating composition (U) was applied and fired in the same manner as in Example 1 to obtain an article having a coating film formed thereon. The coating film of the article was evaluated. The results are shown in Tables 5, 9 and 11.

Further, a scanning electron microscopic photograph of a cross section of the coating film is shown in Fig. 2.

### EXAMPLE 23

### PREPARATION OF COATING COMPOSITION (V):

A coating composition (V) having a solid content concentration of 1.5 mass% was prepared in the same manner as in Example 4 except that the modified ethanol was changed to 54.1 g, and 4.5 g of α-terpineol was added. The compositional components are shown in Table 2.

### FORMATION OF COATING FILM:

On the glass plate prepared in the same manner as in Example 1, the coating composition (V) was applied and fired in the same manner as in Example 1 to obtain an article having a coating film formed thereon. The coating film of the article was evaluated. The results are shown in Table 5.

### EXAMPLE 24

### PREPARATION OF COATING COMPOSITION (W):

A coating composition (W) having a solid content concentration of 1.5 mass% was prepared in the same manner as in Example 6 except that the modified ethanol was changed to 42.4 g, and 4.5 g of α-terpineol was added. The compositional components are shown in Table 2.

### FORMATION OF COATING FILM:

On the glass plate prepared in the same manner as in Example 1, the coating composition (W) was applied and fired in the same manner as in Example 1 to obtain an article having a coating film formed thereon. The coating film of the article was evaluated. The results are shown in Tables 5 and 7.

### EXAMPLE 25

### PREPARATION OF COATING COMPOSITION (X):

A coating composition (X) having a solid content concentration of 1.5 mass% was prepared in the same manner as in Example 8 except that the modified ethanol was changed to 30.7 g, and 4.5 g of α-terpineol was added. The compositional components are shown in Table 2.

### FORMATION OF COATING FILM:

On the glass plate prepared in the same manner as in Example 1, the coating composition (X) was applied and fired in the same manner as in Example 1 to obtain an article having a coating film formed thereon. The coating film of the article was evaluated. The results are shown in Tables 5, 6 and 7.

### EXAMPLE 26

### PREPARATION OF COATING COMPOSITION (Y):

A coating composition (Y) having a solid content concentration of 1.5 mass% was prepared in the same manner as in Example 10 except that the modified ethanol was changed to 13.1 g, and 4.5 g of α-terpineol was added. The compositional components are shown in Table 2.

### FORMATION OF COATING FILM:

On the glass plate prepared in the same manner as in Example 1, the coating composition (Y) was applied and fired in the same manner as in Example 1 to obtain an article having a coating film formed thereon. The coating film of the article was evaluated. The results are shown in Tables 5 and 6.

### EXAMPLE 27

### PREPARATION OF COATING COMPOSITION (Z):

A coating composition (Z) having a solid content concentration of 1.5 mass% was prepared in the same manner as in Example 6 except that the modified ethanol was changed to 16.9 g, and 30.0 g of α-terpineol was added. The compositional components are shown in Table 2.

### FORMATION OF COATING FILM:

On the glass plate prepared in the same manner as in Example 1, the coating composition (Z) was applied and fired in the same manner as in Example 1 to obtain an article having a coating film formed thereon. The coating film of the article was evaluated. The results are shown in Table 5.

### EXAMPLE 28

### PREPARATION OF COATING COMPOSITION (AA):

While stirring 2.6 g of modified ethanol, 61.4 g of the binder solution (i) and 1.0 g of the dispersion (ii) of fine chain SiO₂ particles were added thereto, and 5.0 g of diacetone alcohol and 30.0 g of α-terpineol were added to prepare a coating composition (AA) having a solid content concentration of 1.5 mass%. The compositional components are shown in Table 2.

### FORMATION OF COATING FILM:

On the glass plate prepared in the same manner as in Example 1, the coating composition (AA) was applied and fired in the same manner as in Example 1 to obtain an article having a coating film formed thereon. The coating film of the article was evaluated. The results are shown in Tables 5, 6 and 7.

### EXAMPLE 29

### PREPARATION OF COATING COMPOSITION (AB):

A coating composition (AB) having a solid content concentration of 1.5 mass% was prepared in the same manner as in Example 3 except that the modified ethanol was changed to 64.35 g, and 0.15 g of α-terpineol was added. The compositional components are shown in Table 2.

### FORMATION OF COATING FILM:

On the glass plate prepared in the same manner as in Example 1, the coating composition (AB) was applied and fired in the same manner as in Example 1 to obtain an article having a coating film formed thereon. The coating film of the article was evaluated. The results are shown in Tables 5 and 6.

### EXAMPLE 30

### PREPARATION OF COATING COMPOSITION (AC):

A coating composition (AC) having a solid content concentration of 1.5 mass% was prepared in the same manner as in Example 6 except that the modified ethanol was changed to 39.9 g, and 7.0 g of α-terpineol was added. The compositional components are shown in Table 2.

### FORMATION OF COATING FILM:

On the glass plate prepared in the same manner as in Example 1, the coating composition (AC) was applied and fired in the same manner as in Example 1 to obtain an article having a coating film formed thereon. The coating film of the article was evaluated. The results are shown in Tables 5 and 6.

### EXAMPLE 31

### PREPARATION OF COATING COMPOSITION (AD):

A coating composition (AD) having a solid content concentration of 1.5 mass% was prepared in the same manner as in Example 4 except that the modified ethanol was changed to 58.4 g, and 0.3 g of α-terpineol was added. The compositional components are shown in Table 2.

### FORMATION OF COATING FILM:

On the glass plate prepared in the same manner as in Example 1, the coating composition (AD) was applied and fired in the same manner as in Example 1 to obtain an article having a coating film formed thereon. The coating film of the article was evaluated. The results are shown in Tables 5, 6 and 7.

### EXAMPLE 32

### PREPARATION OF COATING COMPOSITION (AE):

A coating composition (AE) having a solid content concentration of 1.5 mass% was prepared in the same manner as in Example 10 except that the modified ethanol was changed to 17.3 g, and 0.3 g of α-terpineol was added. The compositional components are shown in Table 2.

### FORMATION OF COATING FILM:

On the glass plate prepared in the same manner as in Example 1, the coating composition (AE) was applied and fired in the same manner as in Example 1 to obtain an article having a coating film formed thereon. The coating film of the article was evaluated. The results are shown in Tables 5 and 7.

### EXAMPLE 33

### PREPARATION OF COATING COMPOSITION (AF):

A coating composition (AF) having a solid content concentration of 1.5 mass% was prepared in the same manner as in Example 5 except that the modified ethanol was changed to 51.7 g, and 1.0 g of α-terpineol was added. The compositional components are shown in Table 3.

### FORMATION OF COATING FILM:

On the glass plate prepared in the same manner as in Example 1, the coating composition (AF) was applied and fired in the same manner as in Example 1 to obtain an article having a coating film formed thereon. The coating film of the article was evaluated. The results are shown in Tables 5, 6 and 7.

### EXAMPLE 34

### PREPARATION OF COATING COMPOSITION (AG):

A coating composition (AG) having a solid content concentration of 1.5 mass% was prepared in the same manner as in Example 9 except that the modified ethanol was changed to 28.4 g, and 1.0 g of α-terpineol was added. The compositional components are shown in Table 3.

### FORMATION OF COATING FILM:

On the glass plate prepared in the same manner as in Example 1, the coating composition (AG) was applied and fired in the same manner as in Example 1 to obtain an article having a coating film formed thereon. The coating film of the article was evaluated. The results are shown in Tables 5, 6 and 7.

### EXAMPLE 35

### PREPARATION OF COATING COMPOSITION (AH):

A coating composition (AH) having a solid content concentration of 1.5 mass% was prepared in the same manner as in Example 5 except that the modified ethanol was changed to 22.7 g, and 30.0 g of α-terpineol was added. The compositional components are shown in Table 3.

### FORMATION OF COATING FILM:

On the glass plate prepared in the same manner as in Example 1, the coating composition (AH) was applied and fired in the same manner as in Example 1 to obtain an article having a coating film formed thereon. The coating film of the article was evaluated. The results are shown in Tables 5, 6 and 7.

### EXAMPLE 36

### PREPARATION OF COATING COMPOSITION (Al):

While stirring 4.4 g of modified ethanol, 47.7 g of the binder solution (i) and 2.9 g of the dispersion (ii) of fine chain SiO₂ particles were added thereto, and 10 g of ethylene glycol monoisopropyl ether, 5 g of diacetone alcohol and 30 g of α-terpineol were added to prepare a coating composition (Al) having a solid content concentration of 1.5 mass%. The compositional components are shown in Table 3.

### FORMATION OF COATING FILM:

On the glass plate prepared in the same manner as in Example 1, the coating composition (Al) was applied and fired in the same manner as in Example 1 to obtain an article having a coating film formed thereon. The coating film of the article was evaluated. The results are shown in Tables 5, 6 and 7.

### EXAMPLE 37

### PREPARATION OF COATING COMPOSITION (AJ):

A coating composition (AJ) having a solid content concentration of 1.5 mass% was prepared in the same manner as in Example 7 except that the modified ethanol was changed to 38.1 g, and 3.0 g of α-terpineol was added. The compositional components are shown in Table 3.

### FORMATION OF COATING FILM:

On the glass plate prepared in the same manner as in Example 1, the coating composition (AJ) was applied and fired in the same manner as in Example 1 to obtain an article having a coating film formed thereon. The coating film of the article was evaluated. The results are shown in Tables 5, 6 and 8.

### EXAMPLE 38

### FORMATION OF COATING FILM:

An article having a coating film formed thereon was obtained in the same manner as in Example 37 except that the firing temperature was changed to 100°C. The coating film of the article was evaluated. The results are shown in Table 8.

### EXAMPLE 39

### PREPARATION OF COATING COMPOSITION (AK):

A coating composition (AK) having a solid content concentration of 1.5 mass% was prepared in the same manner as in Example 6 except that the modified ethanol was changed to 45.4 g, and 1.5 g of citral was added. The compositional components are shown in Table 3.

### FORMATION OF COATING FILM:

On the glass plate prepared in the same manner as in Example 1, the coating composition (AK) was applied and fired in the same manner as in Example 1 to obtain an article having a coating film formed thereon. The coating film of the article was evaluated. The results are shown in Table 9.

### EXAMPLE 40

### PREPARATION OF COATING COMPOSITION (AL):

A coating composition (AL) having a solid content concentration of 1.5 mass% was prepared in the same manner as in Example 6 except that the modified ethanol was changed to 45.4 g, and 1.5 g of β-ionone was added. The compositional components are shown in Table 3.

### FORMATION OF COATING FILM:

On the glass plate prepared in the same manner as in Example 1, the coating composition (AL) was applied and fired in the same manner as in Example 1 to obtain an article having a coating film formed thereon. The coating film of the article was evaluated. The results are shown in Table 9.

### EXAMPLE 41

### PREPARATION OF COATING COMPOSITION (AM):

A coating composition (AM) having a solid content concentration of 1.5 mass% was prepared in the same manner as in Example 6 except that the modified ethanol was changed to 45.4 g, and 1.5 g of phytol was added. The compositional components are shown in Table 3.

### FORMATION OF COATING FILM:

On the glass plate prepared in the same manner as in Example 1, the coating composition (AM) was applied and fired in the same manner as in Example 1 to obtain an article having a coating film formed thereon. The coating film of the article was evaluated. The results are shown in Table 9.

### EXAMPLE 42

### PREPARATION OF COATING COMPOSITION (AN):

A coating composition (AN) having a solid content concentration of 1.5 mass% was prepared in the same manner as in Example 13 except that the modified ethanol was changed to 37.7 g, and 4.5 g of α-terpineol was added. The compositional components are shown in Table 3.

### FORMATION OF COATING FILM:

On the glass plate prepared in the same manner as in Example 1, the coating composition (AN) was applied and fired in the same manner as in Example 1 to obtain an article having a coating film formed thereon. The coating film of the article was evaluated. The results are shown in Table 10.

### EXAMPLE 43

### PREPARATION OF COATING COMPOSITION (AO):

While stirring 38.9 g of modified ethanol, 34.1 g of the binder solution (i) and 2.5 g of the dispersion (v) of fine spherical TiO₂ particles were added thereto, and 15.0 g of ethylene glycol monoisopropyl ether, 5.0 g of diacetone alcohol and 4.5 g of α-terpineol were added to prepare a coating composition (AO) having a solid content concentration of 1.5 mass%. The compositional components are shown in Table 3.

### FORMATION OF COATING FILM:

On the glass plate prepared in the same manner as in Example 1, the coating composition (AO) was applied and fired in the same manner as in Example 1 to obtain an article having a coating film formed thereon. The coating film of the article was evaluated. The results are shown in Table 10.

### EXAMPLE 44

### PREPARATION OF COATING COMPOSITION (AP):

While stirring 39.6 g of modified ethanol, 24.0 g of 2-butanol, 16.4 g of the binder solution (i) and 3.5 g of the dispersion (iii) of fine chain SiO₂ particles were added thereto, and 15.0 g of diacetone alcohol and 1.5 g of α-terpineol were added to prepare a coating composition (AP) having a solid content concentration of 0.9 mass%. The compositional components are shown in Table 3.

### FORMATION OF COATING FILM:

The glass plate was prepared in the same manner as in Example 1. Then, the glass plate maintained at 30°C by a preheating furnace (ETAC HT320 manufactured by Kusumoto Chemicals, Ltd.) was set on a table in a booth wherein a spray coating robot (JE005F manufactured by Kawasaki Robotics K.K.), and the coating composition (AP) was applied by spray coating. Thereafter, firing was carried out to obtain an article having a coating film formed thereon. The coating film of the article was evaluated. The results are shown in Table 11.

### EXAMPLE 45

### PREPARATION OF COATING COMPOSITION (AQ):

A coating composition (AQ) having a solid content concentration of 1.5 mass% was prepared in the same manner as in Example 6 except that the modified ethanol was changed to 45.4 g, and 1.5 g of citronellic acid was added. The compositional components are shown in Table 3.

### FORMATION OF COATING FILM:

On the glass plate prepared in the same manner as in Example 1, the coating composition (AQ) was applied and fired in the same manner as in Example 1 to obtain an article having a coating film formed thereon. The coating film of the article was evaluated. The results are shown in Table 9.

### EXAMPLE 46

### PREPARATION OF COATING COMPOSITION (AR):

A coating composition (AR) having a solid content concentration of 1.5 mass% was prepared in the same manner as in Example 6 except that the modified ethanol was changed to 45.4 g, and 1.5 g of terpinyl acetate was added. The compositional components are shown in Table 3.

### FORMATION OF COATING FILM:

On the glass plate prepared in the same manner as in Example 1, the coating composition (AR) was applied and fired in the same manner as in Example 1 to obtain an article having a coating film formed thereon. The coating film of the article was evaluated. The results are shown in Table 9.

### EXAMPLE 47

### PREPARATION OF COATING COMPOSITION FOR UNDER COAT:

While stirring 39.0 g of modified ethanol, a mixed liquid comprising 3.0 g of deionized water and 0.05 g of 61 mass% nitric acid was added thereto, followed by stirring for 5 minutes. Then, 3.5 g of tetraethoxysilane (solid content concentration calculated as SiO₂: 29 mass%) was added thereto, followed by stirring at room temperature for 30 minutes, and then, 54.45 g of modified ethanol was added to prepare a coating composition for under coat having a solid content concentration of 1.0 mass%.

### FORMATION OF COATING FILM:

A glass plate was prepared in the same manner as in Example 1 except that the substrate was changed to a figured glass (Solite manufactured by Asahi Glass Company, Limited, soda lime glass with low iron content (white plate glass), size: 100 mm × 100 mm, thickness: 3.2 mm). Then, the glass plate was set at room temperature on a table in a booth wherein a spray coating robot (JE005F manufactured by Kawasaki Robotics K.K.) was set, and the coating composition for under coat was applied by spray coating. After the coating, the glass plate was preliminarily heated in a preheating furnace (ETAC HT320 manufactured by Kusumoto Chemicals, Ltd.) and maintained at 35°C on the table, and in that state, the coating composition (AP) in Example 44 was applied by spray coating. Then, firing was carried out to obtain an article having a coating film formed thereon. The coating film of the articles was evaluated. The results are shown in Table 11.

**TABLE 1**

| Ex. | Coating composition | Binder solution (i) | Dispersion of fine particles | | | Fine particles/ binder (mass ratio) | Terpene derivative | | | Amount of PPG [g] | Amount of dispersion medium [g] | | | Firing temperature [°C] |
|---|---|---|---|---|---|---|---|---|---|---|---|---|---|---|
| | | Amount [g] | Fine particles | Dispersion | Amount [g] | | Terpene derivative | Amount [g] | Parts by mass*¹ | | Modified ethanol | EGMIPE | DAA | |
| 1 | A | 20.5 | Hollow SiO₂ | (ii) | 8.8 | 70/30 | - | | | | 50.8 | 15 | 5 | 500 |
| 2 | B | | Chain SiO₂ | (iii) | 9.7 | 100/0 | - | | | | 70.3 | 15 | 5 | 500 |
| 3 | C | 6.8 | Chain SiO₂ | (iii) | 8.7 | 90/10 | - | | | | 64.5 | 15 | 5 | 500 |
| 4 | D | 13.6 | Chain SiO₂ | (iii) | 7.7 | 80/20 | - | | | | 58.7 | 15 | 5 | 500 |
| 5 | E | 20.5 | Chain SiO₂ | (iii) | 6.8 | 70/30 | - | | | | 52.7 | 15 | 5 | 500 |
| 6 | F | 27.3 | Chain SiO₂ | (iii) | 5.8 | 60/40 | - | | | | 46.9 | 15 | 5 | 500 |
| 7 | G | 34.1 | Chain SiO₂ | (iii) | 4.8 | 50/50 | - | | | | 41.1 | 15 | 5 | 500 |
| 8 | H | 40.9 | Chain SiO₂ | (iii) | 3.9 | 40/60 | - | | | | 35.2 | 15 | 5 | 500 |
| 9 | I | 47.7 | Chain SiO₂ | (iii) | 2.9 | 30/70 | - | | | | 29.4 | 15 | 5 | 500 |
| 10 | J | 61.4 | Chain SiO₂ | (iii) | 1 | 10/90 | - | | | | 17.6 | 15 | 5 | 500 |
| 11 | K | 68.2 | Nil | | | 0/100 | - | | | 1.5 | 10.3 | 15 | 5 | 500 |
| 12 | K | 68.2 | Nil | | | 0/100 | - | | | 1.5 | 10.3 | 15 | 5 | 100 |
| 13 | L | 34.1 | Plate-form Al₂O₃ | (iv) | 3.7 | 50/50 | - | | | | 42.2 | 15 | 5 | 500 |
| 14 | M | 68.2 | Nil | | | 0/100 | α-Terpineol | 0.15 | 0.1 | | 11.65 | 15 | 5 | 500 |
| 15 | N | 68.2 | Nil | | | 0/100 | α-Terpineol | 4.5 | 3.0 | | 7.3 | 15 | 5 | 500 |
| 16 | O | 68.2 | Nil | | | 0/100 | α-Terpineol | 30 | 20.0 | | 0.3 | | 1.5 | 500 |

| | | | | | | | | | | | | | | |
|---|---|---|---|---|---|---|---|---|---|---|---|---|---|---|
| ^{*1}: Amount per 1 part by mass of solid content PPG: Polypropylene glycol EGMIPE: Ethylene glycol monoisopropyl ether DAA: Diacetone alcohol | | | | | | | | | | | | | | |

**TABLE 2**

| Ex. | Coating composition | Binder solution (i) | Dispersion of fine particles | | | Fine particles/ binder (mass ratio) | Terpene derivative | | | Amount of dispersion medium [g] | | | Firing temperature [°C] |
|---|---|---|---|---|---|---|---|---|---|---|---|---|---|
| | | Amount [g] | Fine particles | Dispersion | Amount [g] | | Terpene derivative | Amount [g] | Parts by mass*¹ | Modified ethanol | EGMIPE | DAA | |
| 17 | P | 34.1 | Hollow SiO₂ | (ii) | 6.3 | 50/50 | α-Terpineol | 2 | 1.3 | 37.6 | 15 | 5 | 500 |
| 18 | Q | 40.9 | Hollow SiO₂ | (ii) | 5 | 40/60 | α-Terpineol | 3 | 2.0 | 31.1 | 15 | 5 | 500 |
| 19 | R | | Chain SiO₂ | (iii) | 9.7 | 100/0 | α-Terpineol | 0.15 | 0.1 | 70.15 | 15 | 5 | 500 |
| 20 | D | 27.3 | Chain SiO₂ | (iii) | 5.8 | 60/40 | α-Terpineol | 0.15 | 0.1 | 46.75 | 15 | 5 | 500 |
| 21 | T | 61.4 | Chain SiO₂ | (iii) | 1 | 10/90 | α-Terpineol | 0.15 | 0.1 | 17.45 | 15 | 5 | 500 |
| 22 | U | 27.3 | Chain SiO₂ | (iii) | 5.8 | 60/40 | α-Terpineol | 1.5 | 1.0 | 45.4 | 15 | 5 | 500 |
| 23 | V | 13.6 | Chain SiO₂ | (iii) | 7.7 | 80/20 | α-Terpineol | 4.5 | 3.0 | 54.1 | 15 | 5 | 500 |
| 24 | W | 27.3 | Chain SiO₂ | (iii) | 5.8 | 60/40 | α-Terpineol | 4.5 | 3.0 | 42.4 | 15 | 5 | 500 |
| 25 | X | 40.9 | Chain SiO₂ | (iii) | 3.9 | 40/60 | α-Terpineol | 4.5 | 3.0 | 30.7 | 15 | 5 | 500 |
| 26 | Y | 61.4 | Chain SiO₂ | (iii) | 1 | 10/90 | α-Terpineol | 4.5 | 3.0 | 13.1 | 15 | 5 | 500 |
| 27 | Z | 27.3 | Chain SiO₂ | (iii) | 5.8 | 60/40 | α-Terpineol | 30 | 20.0 | 16.9 | 15 | 5 | 500 |
| 28 | AA | 61.4 | Chain SiO₂ | (iii) | 1 | 10/90 | α-Terpineol | 30 | 19.9 | 2.6 | | 5 | 500 |
| 29 | AB | 6.8 | Chain SiO₂ | (iii) | 8.7 | 90/10 | α-Terpineol | 0.15 | 0.1 | 64.35 | 15 | 5 | 500 |
| 30 | AC | 27.3 | Chain SiO₂ | (iii) | 5.8 | 60/40 | α-Terpineol | 7 | 4.7 | 39.9 | 15 | 5 | 500 |
| 31 | AD | 13.6 | Chain SiO₂ | (iii) | 7.7 | 80/20 | α-Terpineol | 0.3 | 0.2 | 58.4 | 15 | 5 | 500 |
| 32 | AE | 61.4 | Chain SiO₂ | (iii) | 1 | 10/90 | α-Terpineol | 0.3 | 0.2 | 17.3 | 15 | 5 | 500 |

| | | | | | | | | | | | | | |
|---|---|---|---|---|---|---|---|---|---|---|---|---|---|
| ^{*1}: Amount per 1 part by mass of solid content EGMIPE: Ethylene glycol monoisopropyl ether DAA: Diacetone alcohol | | | | | | | | | | | | | |

**TABLE 3**

| Ex. | Coating composition | Binder solution (i) | Dispersion of fine particles | | | Fine particles/ binder (mass ratio) | Terpene derivative | | | Amount of dispersion medium [g] | | | | Firing temperature [°C] |
|---|---|---|---|---|---|---|---|---|---|---|---|---|---|---|
| | | Amount [g] | Fine particles | Dispersion | Amount [g] | | Terpene derivative | Amount [g] | Parts by mass*¹ | Modified ethanol | 2-Butanol | EGMIPE | DAA | |
| 33 | AF | 20.5 | Chain SiO₂ | (iii) | 6.8 | 70/30 | α-Terpineol | 1 | 0.7 | 51.7 | | 15 | 5 | 500 |
| 34 | AG | 47.7 | Chain SiO₂ | (iii) | 2.9 | 30/70 | α-Terpineol | 1 | 0.7 | 28.4 | | 15 | 5 | 500 |
| 35 | AH | 20.5 | Chain SiO₂ | (iii) | 6.8 | 70/30 | α-Terpineol | 30 | 19.9 | 22.7 | | 15 | 5 | 500 |
| 36 | Al | 47.7 | Chain SiO₂ | (iii) | 2.9 | 30/70 | α-Terpineol | 30 | 20.0 | 4.4 | | 10 | 5 | 500 |
| 37 | AJ | 34.1 | Chain SiO₂ | (iii) | 4.8 | 50/50 | α-Terpineol | 3 | 2.0 | 38.1 | | 15 | 5 | 500 |
| 38 | AJ | 34.1 | Chain SiO₂ | (iii) | 4.8 | 50/50 | α-Terpineol | 3 | 2.0 | 38.1 | | 15 | 5 | 100 |
| 39 | AK | 27.3 | Chain SiO₂ | (iii) | 5.8 | 60/40 | Citral | 1.5 | 1.0 | 45.4 | | 15 | 5 | 500 |
| 40 | AL | 27.3 | Chain SiO₂ | (iii) | 5.8 | 60/40 | β-Ionone | 1.5 | 1.0 | 45.4 | | 15 | 5 | 500 |
| 41 | AM | 27.3 | Chain SiO₂ | (iii) | 5.8 | 60/40 | Phytol | 1.5 | 1.0 | 45.4 | | 15 | 5 | 500 |
| 42 | AN | 34.1 | Plate-form Al₂O₃ | (iv) | 3.7 | 50/50 | α-Terpineol | 4.5 | 3.0 | 37.7 | | 15 | 5 | 500 |
| 43 | AO | 34.1 | Spherical TiO₂ | (v) | 2.5 | 50/50 | α-Terpineol | 4.5 | 3.0 | 38.9 | | 15 | 5 | 500 |
| 44 | AP | 16.4 | Chain SiO₂ | (iii) | 3.5 | 60/40 | α-Terpineol | 1.5 | 1.7 | 39.6 | 24 | | 15 | 500 |
| 45 | AQ | 27.3 | Chain SiO₂ | (iii) | 5.8 | 60/40 | Citronellic acid | 1.5 | 1.0 | 45.4 | | 15 | 5 | 500 |
| 46 | AR | 27.3 | Chain SiO₂ | (iii) | 5.8 | 60/40 | Terpinyl acetate | 1.5 | 1.0 | 45.4 | | 15 | 5 | 500 |

| | | | | | | | | | | | | | | |
|---|---|---|---|---|---|---|---|---|---|---|---|---|---|---|
| ^{*1}: Amount per 1 part by mass of solid content EGMIPE: Ethylene glycol monoisopropyl ether DAA: Diacetone alcohol | | | | | | | | | | | | | | |

**TABLE 4**

| Ex. | Coating composition | Fine particles | Fine particles/ binder (mass ratio) | Terpene derivative | Terpene derivative*¹ (parts by mass) | Reflectance [%] | Abrasion resistance | Material cost |
|---|---|---|---|---|---|---|---|---|
| 1 | A | Hollow SiO₂ | 70/30 | - | | 0.2 | ○ | × |
| 17 | P | Hollow SiO₂ | 50/50 | α-Terpineol | 1.3 | 0.1 | ○ | Δ |
| 18 | Q | Hollow SiO₂ | 40/60 | α-Terpineol | 2.0 | 0.2 | ○ | Δ |

| | | | | | | | | |
|---|---|---|---|---|---|---|---|---|
| *1: Amount per 1 part by mass of solid content | | | | | | | | |

The coating film in Example 17 or 18 made of the coating composition comprising a combination of hollow fine SiO₂ particles and the terpene derivative (c) had a sufficient antireflection effect with low reflectance.

The coating film in Example 1 requires a high material cost since a large amount of hollow fine SiO₂ particles are used. On the other hand, as in Example 17, by adding α-terpineol, it was possible to reduce hollow fine SiO₂ particles in the coating film while maintaining a sufficient antireflection effect. Further, even in a case where hollow fine SiO₂ particles in the coating film are further reduced as in Example 18, it was possible to obtain a sufficient antireflection effect equal to Example 1.

**TABLE 5**

| Ex. | Coating composition | Fine particles | Fine particles/ binder (mass ratio) | Terpene derivative | Terpene derivative*¹ (parts by mass) | Reflectance [%] |
|---|---|---|---|---|---|---|
| 2 | B | Chain SiO₂ | 100/0 | - | | 0.1 |
| 3 | C | Chain SiO₂ | 90/10 | - | | 0.2 |
| 4 | D | Chain SiO₂ | 80/20 | - | | 0.6 |
| 5 | E | Chain SiO₂ | 70/30 | - | | 1 |
| 6 | F | Chain SiO₂ | 60/40 | - | | 2.5 |
| 7 | G | Chain SiO₂ | 50/50 | - | | 2.8 |
| 8 | H | Chain SiO₂ | 40/60 | - | | 2.8 |
| 9 | I | Chain SiO₂ | 30/70 | - | | 2.8 |
| 10 | J | Chain SiO₂ | 10/90 | - | | 2.8 |
| 14 | M | Nil | 0/100 | α-Terpineol | 0.1 | 2.8 |
| 15 | N | Nil | 0/100 | α-Terpineol | 3.0 | 2.7 |
| 16 | O | Nil | 0/100 | α-Terpineol | 20.0 | 2.8 |
| 19 | R | Chain SiO₂ | 100/0 | α-Terpineol | 0.1 | 0.03 |
| 29 | AB | Chain SiO₂ | 90/10 | α-Terpineol | 0.1 | 0.1 |
| 23 | V | Chain SiO₂ | 80/20 | α-Terpineol | 3.0 | 0.1 |
| 31 | AD | Chain SiO₂ | 80/20 | α-Terpineol | 0.2 | 0.3 |
| 33 | AF | Chain SiO₂ | 70/30 | α-Terpineol | 0.7 | 0.2 |
| 35 | AH | Chain SiO₂ | 70/30 | α-Terpineol | 19.9 | 0.1 |
| 20 | S | Chain SiO₂ | 60/40 | α-Terpineol | 0.1 | 2.3 |
| 22 | U | Chain SiO₂ | 60/40 | α-Terpineol | 1.0 | 0.2 |
| 24 | W | Chain SiO₂ | 60/40 | α-Terpineol | 3.0 | 0.1 |
| 30 | AC | Chain SiO₂ | 60/40 | α-Terpineol | 4.7 | 0.1 |
| 27 | Z | Chain SiO₂ | 60/40 | α-Terpineol | 20.0 | 0.1 |
| 37 | AJ | Chain SiO₂ | 50/50 | α-Terpineol | 2.0 | 0.1 |
| 25 | X | Chain SiO₂ | 40/60 | α-Terpineol | 3.0 | 0.2 |
| 34 | AG | Chain SiO₂ | 30/70 | α-Terpineol | 0.7 | 0.1 |
| 36 | Al | Chain SiO₂ | 30/70 | α-Terpineol | 20.0 | 0.2 |
| 21 | T | Chain SiO₂ | 10/90 | α-Terpineol | 0.1 | 2.6 |
| 32 | AE | Chain SiO₂ | 10/90 | α-Terpineol | 0.2 | 2.5 |
| 26 | Y | Chain SiO₂ | 10/90 | α-Terpineol | 3.0 | 0.2 |
| 28 | AA | Chain SiO₂ | 10/90 | α-Terpineol | 19.9 | 0.7 |

| | | | | | | |
|---|---|---|---|---|---|---|
| *1: Amount per 1 part by mass of solid content | | | | | | |

In coating films in Examples 2 to 10, fine chain SiO₂ particles were used, and in order to obtain a sufficient antireflection effect, it was necessary to increase fine chain SiO₂ particles (for example, in order to bring the reflectance to at most 2.6, it was necessary to bring the mass ratio of the fine chain SiO₂ particles to the binder (d) to be at least 60/40). On the other hand, as in Examples 19 to 39, by adding α-terpineol, the antireflection effect was improved as compared with a case where no α-terpineol was added. Accordingly, it was possible to bring the reflectance to be at most 2.6 even when the amount of the fine chain SiO₂ particles was reduced to bring the mass ratio of the fine chain SiO₂ particles to the binder (d) to be 10/90. Further, by adjusting the amount of α-terpineol, a sufficient antireflection effect was obtained, and therefore even in a case where fine chain SiO₂ particles were used without using relatively expensive hollow fine SiO₂ particles, a reflectance of equal level as in the case of using hollow fine SiO₂ particles was realized, and thus, it was possible to form a coating film having a high antireflection effect at low cost. Further, the coating films in Examples 14 to 16 were formed from coating compositions wherein the terpene derivative (c) was added in a state where no fine particles (b) to be nuclei were present, whereby no improvement in the antireflection effect by the addition of the α-terpineol was observed.

**TABLE 6**

| Ex. | Coating composition | Fine particles | Fine particles/ binder (mass ratio) | Terpene derivative | Terpene derivative*¹ (parts by mass) | Reflectance [%] | Abrasion resistance |
|---|---|---|---|---|---|---|---|
| 19 | R | Chain SiO₂ | 100/0 | α-Terpineol | 0.1 | 0.03 | × |
| 3 | C | Chain SiO₂ | 90/10 | - | | 0.2 | Δ |
| 31 | AD | Chain SiO₂ | 80/20 | α-Terpineol | 0.2 | 0.3 | ○ |
| 33 | AF | Chain SiO₂ | 70/30 | α-Terpineol | 0.7 | 0.2 | ○ |
| 35 | AH | Chain SiO₂ | 70/30 | α-Terpineol | 19.9 | 0.1 | O |
| 24 | W | Chain SiO₂ | 60/40 | α-Terpineol | 3.0 | 0.1 | ⊚ |
| 30 | AC | Chain SiO₂ | 60/40 | α-Terpineol | 4.7 | 0.1 | ⊚ |
| 37 | AJ | Chain SiO₂ | 50/50 | α-Terpineol | 2.0 | 0.1 | ⊚ |
| 25 | X | Chain SiO₂ | 40/60 | α-Terpineol | 3.0 | 0.2 | ⊚ |
| 34 | AG | Chain SiO₂ | 30/70 | α-Terpineol | 0.7 | 0.1 | ⊚ |
| 36 | Al | Chain SiO₂ | 30/70 | α-Terpineol | 20.0 | 0.2 | ⊚ |
| 21 | T | Chain SiO₂ | 10/90 | α-Terpineol | 0.1 | 2.6 | ⊚ |
| 26 | Y | Chain SiO₂ | 10/90 | α-Terpineol | 3.0 | 0.2 | ⊚ |
| 28 | AA | Chain SiO₂ | 10/90 | α-Terpineol | 19.9 | 0.7 | ⊚ |

| | | | | | | | |
|---|---|---|---|---|---|---|---|
| *1: Amount per 1 part by mass of solid content | | | | | | | |

The coating film in Example 19 was formed from a coating composition containing no binder (d) with a mass ratio of the fine chain SiO₂ particles to the binder (d) being 100/0, whereby the abrasion resistance was inadequate although the antireflection effect was improved by the addition of α-terpineol. Whereas, in the coating film in Example 3, the mass ratio of the fine chain SiO₂ particles to the binder (d) was 90/10, and although the binder (d) was contained, the amount of the binder (d) was so small that the abrasion resistance was inadequate. The coating films in Examples 21, 24 to 26, 28 to 31 and 33 to 36 were formed by using coating compositions containing a sufficient amount of the binder (d), whereby it was possible to satisfy both the abrasion resistance and improvement of the antireflection effect by the addition of α-terpineol. Particularly, in Example 33 having the same reflectance as in Example 3, by increasing α-terpineol, it was possible to increase the amount of the binder (d), whereby it was possible to improve the abrasion resistance as compared with Example 3. Further, as in Examples 21, 26 and 28, even in the case of coating films formed from coating compositions wherein the fine chain SiO₂ particles were reduced substantially with the mass ratio of the fine chain SiO₂ particles to the binder (d) being 10/90, it was possible to substantially improve the abrasion resistance while maintaining the sufficient antireflection effect by adjusting the amount of α-terpineol.

**TABLE 7**

| Ex. | Coating composition | Fine particles | Fine particles/ binder (mass ratio) | Terpene derivative | Terpene derivative*¹ (parts by mass) | Reflectance [%] | Abrasion resistance |
|---|---|---|---|---|---|---|---|
| 31 | AD | Chain SiO₂ | 80/20 | α-Terpineol | 0.2 | 0.3 | ○ |
| 32 | AE | Chain SiO₂ | 10/90 | α-Terpineol | 0.2 | 2.5 | ⊚ |
| 28 | AA | Chain SiO₂ | 10/90 | α-Terpineol | 19.9 | 0.7 | ⊚ |
| 33 | AF | Chain SiO₂ | 70/30 | α-Terpineol | 0.7 | 0.2 | ○ |
| 34 | AG | Chain SiO₂ | 30/70 | α-Terpineol | 0.7 | 0.1 | ⊚ |
| 24 | W | Chain SiO₂ | 60/40 | α-Terpineol | 3.0 | 0.1 | ⊚ |
| 25 | X | Chain SiO₂ | 40/60 | α-Terpineol | 3.0 | 0.2 | ⊚ |
| 35 | AH | Chain SiO₂ | 70/30 | α-Terpineol | 19.9 | 0.1 | ○ |
| 36 | Al | Chain SiO₂ | 30/70 | α-Terpineol | 20.0 | 0.2 | ⊚ |

| | | | | | | | |
|---|---|---|---|---|---|---|---|
| *1: Amount per 1 part by mass of solid content | | | | | | | |

Each of the coating films in Examples 24, 25, 28 and 31 to 36 was formed from a coating composition comprising the fine chain SiO₂ particles and the binder (d), and it had a sufficient antireflection effect and abrasion resistance. Particularly, in Examples 24, 25 and 33 to 36 wherein the mass ratio of the fine chain SiO₂ particles to the binder (d) was from 70/30 to 30/70, and the amount of the terpene derivative (c) satisfies from 0.7 to 20 parts by mass per 1 part by mass of the solid content of the coating composition, the reflectance was at most 0.2, and the coating films had both a high antireflection effect and excellent abrasion resistance.

**TABLE 8**

| Ex. | Coating composition | Fine particles | Fine particles/ binder (mass ratio) | Terpene derivative | Terpene derivative*¹ (parts by mass) | Firing temperature [°C] | Amount of PPG [g] | Reflectance [%] | Abrasion resistance |
|---|---|---|---|---|---|---|---|---|---|
| 11 | K | Nil | 0/100 | - | | 500 | 1.5 | 0.1 | ○ |
| 12 | K | Nil | 0/100 | - | | 100 | 1.5 | 2.8 | Δ |
| 37 | AJ | Chain SiO₂ | 50/50 | α-Terpineol | 2.0 | 500 | | 0.1 | ⊚ |
| 38 | AJ | Chain SiO₂ | 50/50 | α-Terpineol | 2.0 | 100 | | 0.1 | ○ |

| | | | | | | | | | |
|---|---|---|---|---|---|---|---|---|---|
| *1: Amount per 1 part by mass of solid content PPG: Polypropylene glycol | | | | | | | | | |

In the coating films in Examples 11 and 12, a heat decomposable resin was used, whereby at a firing temperature of 500°C, an antireflection effect was obtained, but at a firing temperature of 100°C, the resin remained since the temperature was lower than the heat decomposition temperature of the resin, and the reflectance was not lowered. On the other hand, as in Examples 37 and 38, when α-terpineol was added, not only at 500°C but also at a low temperature at a level of 100°C, an improvement in the antireflection effect was observed, and a sufficient antireflection effect was obtained. Further, in Example 12 employing a heat decomposable resin, at a firing temperature of 100°C, the abrasion resistance was not so high. Whereas, as in Examples 37 and 38, when α-terpineol was added, not only at 500°C but also at a low temperature at a level of 100°C, good abrasion resistance was obtained.

**TABLE 9**

| Ex. | Coating composition | Fine particles | Fine particles/ binder (mass ratio) | Terpene derivative | Terpene derivative*¹ (parts by mass) | Reflectance [%] |
|---|---|---|---|---|---|---|
| 6 | F | Chain SiO₂ | 60/40 | - | | 2.5 |
| 22 | U | Chain SiO₂ | 60/40 | α-Terpineol | 1.0 | 0.2 |
| 39 | AK | Chain SiO₂ | 60/40 | Citral | 1.0 | 0.1 |
| 40 | AL | Chain SiO₂ | 60/40 | β-Ionone | 1.0 | 0.1 |
| 41 | AM | Chain SiO₂ | 60/40 | Phytol | 1.0 | 0.4 |
| 45 | AQ | Chain SiO₂ | 60/40 | Citronellic acid | 1.0 | 0.2 |
| 46 | AR | Chain SiO₂ | 60/40 | Terpinyl acetate | 1.0 | 0.4 |

| | | | | | | |
|---|---|---|---|---|---|---|
| *1: Amount per 1 part by mass of solid content | | | | | | |

The improvement in the antireflection effect was observed even when the type of the terpene derivative (c) was changed as in the case of the coating films in Examples 39 to 41, 45 and 46.

**TABLE 10**

| Ex. | Coating composition | Fine particles | Fine particles/ binder (mass ratio) | Terpene derivative | Terpene derivative*¹ (parts by mass) | Reflectance [%] |
|---|---|---|---|---|---|---|
| 13 | L | Plate-form Al₂O₃ | 50/50 | - | | 4 |
| 42 | AN | Plate-form Al₂O₃ | 50/50 | α-Terpineol | 3.0 | 0.2 |
| 43 | AO | Spherical TiO₂ | 50/50 | α-Terpineol | 3.0 | 1 |

| | | | | | | |
|---|---|---|---|---|---|---|
| *1: Amount per 1 part by mass of solid content | | | | | | |

In the coating film in Example 13, the refractive index of the fine Al₂O₃ particles was high as compared with fine SiO₂ particles, and the refractive index was also large, whereby an antireflection effect was not obtainable. On the other hand, as in Example 42, in a case where α-terpineol was added, the reflectance was lowered as compared with Example 13, and it was possible to obtain a sufficient antireflection effect even if the fine particles (b) were not SiO₂. Further, in the same manner, as in Example 43, a good antireflection effect was obtained even when fine TiO₂ particles were used instead of the fine Al₂O₃ particles.

**TABLE 11**

| Ex. | Coating composition | Fine particles | Fine particles/ binder (mass ratio) | Terpene derivative | Terpene derivative*¹ (parts by mass) | Coating method | Reflectance [%] |
|---|---|---|---|---|---|---|---|
| 22 | U | Chain SiO₂ | 60/40 | α-Terpineol | 1.0 | Spin coating | 0.2 |
| 44 | AP | Chain SiO₂ | 60/40 | α-Terpineol | 1.7 | Spray coating | 0.2 |
| 47 | AP | Chain SiO₂ | 60/40 | α-Terpineol | 1.7 | Spray coating (under coat present) | 1.0 |

| | | | | | | | |
|---|---|---|---|---|---|---|---|
| *1: Amount per 1 part by mass of solid content | | | | | | | |

In Example 44, the coating film was formed by a spray coating method, and in Example 47, an under coat layer and a coating layer were formed by a spray coating method. In the same manner as in Example 22 or other Examples wherein the coating film was formed by a spin coating method, it was possible to obtain a sufficient antireflection effect by adding α-terpineol. Further, as in Example 47, it was possible to obtain a sufficient antireflection effect even when an under coat layer was formed to prevent alkali elution from the glass.

### INDUSTRIAL APPLICABILITY

The coating composition of the present invention is useful as a coating composition for forming an antireflection film. Further, an article having, formed thereon, a coating film (antireflection film) obtainable from the coating composition of the present invention is useful as an article having an antireflection function for the purpose of reducing outside light reflection or improving light transmission, e.g. a cover glass for a solar cell, a display (such as LCD, PDP, organic EL, CRT or SED), a front plate thereof, a window glass for a vehicle (such as an automobile, a train or an airplane), a window glass for houses, a cover glass for a touch panel, or the like.

## Claims

1. A coating composition comprising a dispersion medium (a), fine particles (b) dispersed in the dispersion medium (a), and a terpene derivative (c) dissolved or dispersed in the dispersion medium (a), wherein the fine particles (b) are at least one selected from the group consisting of metal oxide fine particles, metal fine particles, pigment fine particles and resin fine particles, and the fine particles (b) have an average agglomerated particle size of from 1 to 1,000 nm, and the terpene derivative (c) is a terpene derivative having a hydroxyl group and/or a carbonyl group in its molecule, and the amount of the terpene derivative (c) is from 0.1 to 20 parts by mass per 1 part by mass of the solid content of the coating composition,
wherein the coating composition further contains a binder (d),
wherein the mass ratio of the fine particles (b) to the binder (d) (fine particles/binder) is from 9/1 to 1/9.

2. The coating composition according to Claim 1, wherein the terpene derivative (c) has, in its molecule, at least one member selected from the group consisting of a hydroxyl group, an aldehyde group and a keto group.

3. The coating composition according to any one of Claims 1 to 2, wherein the fine particles (b) have an average agglomerated particle size of from 3 to 500 nm.

4. An article comprising a substrate and a coating film obtainable from the coating composition as defined in any one of Claims 1 to 3, formed on the substrate.

5. The article according to Claim 4, wherein the substrate is a figured glass.

## Patentansprüche

1. Beschichtungszusammensetzung, umfassend ein Dispersionsmedium (a), feine Teilchen (b), dispergiert in dem Dispersionsmedium (a), und ein Terpenderivat (c), gelöst oder dispergiert in dem Dispersionsmedium (a), wobei die feinen Teilchen (b) mindestens eines sind, ausgewählt aus der Gruppe, bestehend aus feinen Metalloxidteilchen, feinen Metallteilchen, feinen Pigmentteilchen und feinen Harzteilchen, und die feinen Teilchen (b) eine durchschnittliche agglomerierte Teilchengröße von 1 bis 1000 nm aufweisen, und das Terpenderivat (c) ein Terpenderivat mit einer Hydroxylgruppe und/oder einer Carbonylgruppe in dessen Molekül ist, und die Menge des Terpenderivats (c) von 0,1 bis 20 Masse-Teile pro 1 Masse-Teilen des Feststoffanteils der Beschichtungszusammensetzung beträgt,
wobei die Beschichtungszusammensetzung weiter ein Bindemittel (d) enthält, wobei das Massenverhältnis der feinen Teilchen (b) zu dem Bindemittel (d) (feine Teilchen/Bindemittel) von 9/1 bis 1/9 beträgt.

2. Beschichtungszusammensetzung gemäß Anspruch 1, wobei das Terpenderivat (c) in dessen Molekül mindestens ein Mitglied, ausgewählt aus der Gruppe, bestehend aus einer Hydroxylgruppe, einer Aldehydgruppe und einer Ketogruppe, aufweist.

3. Beschichtungszusammensetzung gemäß einem der Ansprüche 1 bis 2, wobei die feinen Teilchen (b) eine durchschnittliche agglomerierte Teilchengröße von 3 bis 500 nm aufweisen.

4. Gegenstand, umfassend ein Substrat und einen Beschichtungsfilm, erhältlich aus der Beschichtungszusammensetzung, wie in einem der Ansprüche 1 bis 3 definiert, gebildet auf dem Substrat.

5. Gegenstand gemäß Anspruch 4, wobei das Substrat ein Profilglas ist.

## Revendications

1. Composition de revêtement comprenant un milieu de dispersion (a), des particules fines (b) dispersées dans le milieu de dispersion (a), et un dérivé de terpène (c) dissous ou dispersé dans le milieu de dispersion (a), dans laquelle les particules fines (b) sont au moins un type choisi dans le groupe constitué par les particules fines d'oxyde métallique, les particules métalliques fines, les particules fines de pigment et les particules fines de résine, et les particules fines (b) ont une taille moyenne de particules agglomérées de 1 nm à 1000 nm, et le dérivé de terpène (c) est un dérivé de terpène ayant un groupe hydroxyle et/ou un groupe carbonyle dans sa molécule, et la quantité de dérivé de terpène (c) est de 0,1 à 20 parties en poids pour 1 partie en poids de la teneur en solide de la composition de revêtement,
dans laquelle la composition de revêtement contient en outre un liant (d),
dans laquelle le rapport massique entre les particules fines (b) et le liant (d) (particules fines/liant) est de 9/1 à 1/9.

2. Composition de revêtement selon la revendication 1, dans laquelle le dérivé de terpène (c) possède, dans sa molécule, au moins un élément choisi dans le groupe constitué par un groupe hydroxyle, un groupe aldéhyde et un groupe céto.

3. Composition de revêtement selon l'une quelconque des revendications 1 à 2, dans laquelle les particules fines (b) ont une taille moyenne de particules agglomérées de 3 nm à 500 nm.

4. Article comprenant un substrat et un film de revêtement, pouvant être obtenu à partir de la composition de revêtement telle que définie dans l'une quelconque des revendications 1 à 3, formé sur le substrat.

5. Article selon la revendication 4, dans lequel le substrat est un verre façonné.
